# EUROPÄISCHE PATENTSCHRIFT

(11) **EP 4 148 006 B1**
(45) Veröffentlichungstag und Bekanntmachung des Hinweises auf die Patenterteilung: **30.10.2024**
(21) Anmeldenummer: 22193464.9
(22) Anmeldetag: 01.09.2022
(51) Int. Cl.: B65G 47/22

(54) **FÖRDERANLAGE MIT EINEM FÜHRUNGSKÖRPER UND VERWENDUNG EINES FÜHRUNGSKÖRPERS**
CONVEYOR SYSTEM WITH A GUIDE BODY AND USE OF A GUIDE BODY
SYSTÈME DE TRANSPORT DOTÉ D'UN CORPS DE GUIDAGE ET UTILISATION D'UN CORPS DE GUIDAGE

(30) Priorität: 07.09.2021 DE 102021123134
(43) Veröffentlichungstag der Anmeldung: 15.03.2023
(73) Patentinhaber: Deutsche Post AG, 53113 Bonn (DE)
(72) Erfinder: LOH, Hillar, 53859 Niederkassel (DE)
(74) Vertreter: Michalski Hüttermann & Partner Patentanwälte mbB

(56) Entgegenhaltungen:
- ES-A1- 2 651 134
- FR-A1- 2 986 788
- GB-A- 2 490 505

## Beschreibung

### Technisches Gebiet

Die Erfindung betrifft eine Förderanlage umfassend eine Fördervorrichtung zum Transportieren eines Stückgutes entlang einer Transportrichtung und wenigstens einen eine Grundfläche und eine erste insbesondere ebene Seitenfläche aufweisenden Führungskörper.

Zudem betrifft die Erfindung die Verwendung eines Führungskörpers bei einer Fördervorrichtung zum Verschieben eines Stückguts, das von der Fördervorrichtung auf einer Förderfläche entlang einer Transportrichtung transportiert wird, hin zu einer Mitte der Förderfläche.

### Hintergrund der Erfindung

Fördervorrichtungen zum Transportieren eines Stückgutes entlang einer Transportrichtung, wie beispielsweise Bandförderer, sind im Stand der Technik bekannt. Eine Problematik bei Fördervorrichtungen ist, dass Stückgüter, die mit der Fördervorrichtung transportiert werden, von der Fördervorrichtung fallen können. Dem wird in der Regel mit Seitenführungen begegnet, die das Herunterfallen des Stückguts verhindern sollen. Diese haben allerdings den Nachteil, dass der Zugang zu den mit der Fördervorrichtung transportierten Stückgütern erschwert wird. Zudem sind Seitenführungen teuer und beanspruchen Bauraum.

Zudem kann es insbesondere bei Fördervorrichtungen, die eine Förderfläche für das Stückgut aufweisen und einen in Transportrichtung seitlich der Förderfläche angeordneten Seitenrandbereich aufweisen, trotz eventuell vorhandener Seitenführungen zu Situationen kommen, bei der Stückgüter von der Fördervorrichtung herunterfallen. Beispielsweise ist bei einigen Bandförderern die als Band ausgestaltete Förderfläche schmaler als ein Maschinenbett, so dass seitlich neben dem Band, der Seitenrandbereich bleibt, der nicht vom Band überstrichen wird. Beim Transportieren von Stückgütern mit der Fördervorrichtung kann es vorkommen, dass Stückgüter ganz oder teilweise im Seitenrandbereich zu liegen kommen und derart dazu beitragen, dass es zu einer Staubildung der Stückgüter auf der Fördervorrichtung kommt. Durch das weiterlaufende Band und/oder aufgrund der nachfolgenden Stückgüter können die Stückgüter verschoben und/oder aufgetürmt werden und derart von der Fördervorrichtung herunterfallen.

Das Dokument FR 2 986 788 A1, welches eine Förderanlage nach dem Oberbegriff des Anspruchs 1 und die Verwendung eines Führungskörpers nach dem Oberbegriff des Anspruchs 14 offenbart, bezieht sich auf das Gebiet von Materialsortieranlagen und insbesondere auf eine Förder- und Sortiervorrichtung mit mehreren Bändern zum manuellen Sortieren innerhalb einer Materialverarbeitungs- und -rückgewinnungseinheit. Das Dokument schlägt vor, mindestens zwei Förderbandabscheider mit einem modularen Befestigungssystem für Trennelemente, angeordnet zwischen zwei der mindestens drei Förderbänder zu verwenden.

### Beschreibung der Erfindung

Ausgehend von dieser Situation ist es eine Aufgabe der vorliegenden Erfindung, Mittel bereitzustellen, die das Risiko verringern, dass Stückgüter von einer Fördervorrichtung herunterfallen. Zudem ist es Aufgabe der Erfindung, Mittel bereitzustellen, die das Risiko einer Staubildung der Stückgüter auf der Fördervorrichtung verringern. Insbesondere ist es Aufgabe der Erfindung Mittel bereitzustellen, die das Risiko, dass Stückgüter von der Fördervorrichtung herunterfallen, und das Risiko der Staubildung verringern und zugleich den Zugriff zu den Stückgütern auf der Fördervorrichtung ermöglichen.

Die Aufgabe der Erfindung wird durch die Merkmale der unabhängigen Ansprüche gelöst. Vorteilhafte Ausgestaltungen sind in den Unteransprüchen angegeben.

Demnach wird die Aufgabe gelöst durch eine Förderanlage umfassend eine Fördervorrichtung zum Transportieren eines Stückgutes entlang einer Transportrichtung und wenigstens einen eine Grundfläche und eine erste Seitenfläche aufweisenden Führungskörper, wobei die Fördervorrichtung eine Förderfläche für das Stückgut und einen in Transportrichtung seitlich der Förderfläche angeordneten Seitenrandbereich aufweist, wobei die erste Seitenfläche mit der Grundfläche einen Innenschnittwinkel von weniger als 90 Grad ausbildet, wobei der Führungskörper derart angeordnet und/oder ausgestaltet ist, dass zumindest ein Teil seiner Grundfläche auf dem Seitenrandbereich ist, und dass ein Normalenvektor der ersten Seitenfläche schräg entgegen die Transportrichtung hin zu einer Mitte der Förderfläche weist, und wobei die Grundfläche des Führungskörpers ein Trapez ist, zwei zueinander parallele Grundseiten des Trapezes parallel zur Transportrichtung der Fördervorrichtung sind und die kürzere Grundseite des Trapezes näher bei der Mitte der Förderfläche ist als die längere Grundseite des Trapezes.

Zudem wird die Aufgabe durch die Verwendung eines Führungskörpers bei einer Fördervorrichtung zum Verschieben eines Stückguts, das von der Fördervorrichtung auf einer Förderfläche entlang einer Transportrichtung transportiert wird, hin zu einer Mitte der Förderfläche, gelöst, wobei die Fördervorrichtung einen seitlich der Förderfläche angeordneten Seitenrandbereich aufweist, wobei der Führungskörper eine Grundfläche und eine erste Seitenfläche aufweist, wobei die erste Seitenfläche mit der Grundfläche einen Innenschnittwinkel von weniger als 90 Grad ausbildet, wobei der Führungskörper derart ausgestaltet ist, dass bei Anordnung zumindest eines Teils seiner Grundfläche auf dem Seitenrandbereich ein Normalenvektor der ersten Seitenfläche des Führungskörpers schräg entgegen die Transportrichtung hin zu der Mitte der Förderfläche weist, wobei die Grundfläche des Führungskörpers ein Trapez ist, zwei zueinander parallele Grundseiten des Trapezes parallel zur Transportrichtung der Fördervorrichtung sind und die kürzere Grundseite des Trapezes näher bei der Mitte der Förderfläche ist als die längere Grundseite des Trapezes.

Kernidee der Erfindung ist also die Förderanlage umfassend die Fördervorrichtung und den spezifisch gestalteten Führungskörper sowie die Verwendung des Führungskörpers bei der Fördervorrichtung. Der Führungskörper weist die Grundfläche und die erste, bevorzugt ebene Seitenfläche auf und ermöglicht, dass Stückgüter, die mit der Fördervorrichtung transportiert werden, durch Interaktion mit dem Führungskörper eine Bewegung in Richtung Mitte der Förderfläche durchführen. Derart wird das Risiko, dass Stückgüter von der Fördervorrichtung herunterfallen auf einfache Art und Weise verringert. Weiterhin verringert der Führungskörper das Risiko, dass Stückgüter auf dem Seitenrandbereich der Fördervorrichtung liegen bleiben und derart eine Staubildung erwirken, indem die Stückgüter durch Interaktion mit dem Führungskörper in Richtung Mitte der Förderfläche bewegt werden. Somit können die Stückgüter durch die Förderfläche weitertransportiert werden, so dass das Risiko der Staubildung stark verringert wird. Zudem ist der Zugriff auf die Stückgüter, die mit der Fördervorrichtung transportiert werden, weiterhin problemlos möglich. Insbesondere weist der Führungskörper den Vorteil auf, dass er auch bei schon bestehenden Fördervorrichtungen kostengünstig installiert werden kann.

Bevorzugt ist die erste Seitenfläche angrenzend an die Grundfläche des Führungskörpers. Dadurch dass die erste Seitenfläche des Führungskörpers mit der Grundfläche einen Innenschnittwinkel von weniger als 90 Grad aufweist, und dass der Führungskörper derart angeordnet und/oder ausgestaltet ist, dass zumindest ein Teil seiner Grundfläche auf dem Seitenrandbereich ist, ergibt sich bevorzugt zwischen der ersten Seitenfläche des Führungskörpers und der Förderfläche, auf der die Stückgüter transportierbar sind, ein Schnittwinkel von mehr als 90 Grad. Mit Innenschnittwinkel ist der Schnittwinkel der ersten bevorzugt ebenen Seitenfläche mit der Ebene der Grundfläche im Inneren des Führungskörpers gemeint oder wenn die erste Seitenfläche und die Grundfläche nicht direkt aneinander angrenzen der Schnittwinkel der Ebene der ersten bevorzugt ebenen Seitenfläche mit der Ebene der Grundfläche gemessen auf der Seite des Führungskörpers. In anderen Worten ist also der Führungskörper derart ausgestaltet, dass bei Anordnung zumindest eines Teils seiner Grundfläche auf dem Seitenrandbereich, die erste Seitenfläche nicht senkrecht auf die Förderfläche steht, sondern dazu geneigt ist. Zudem ist vorgesehen, dass der Führungskörper derart angeordnet und/oder ausgestaltet ist, dass der Normalenvektor der ersten insbesondere ebenen Seitenfläche schräg entgegen die Transportrichtung hin zu der Mitte der Förderfläche weist. Mit Mitte der Förderfläche ist bevorzugt eine Mittellinie der Förderfläche gemeint, die sich in Transportrichtung entlangzieht und zu beiden Rändern der Förderfläche den gleichen Abstand aufweist. In anderen Worten ist die erste Seitenfläche des Führungskörpers also bevorzugt in Transportrichtung schräg nach hinten weg von der Mitte geneigt. Dies führt dazu, dass Stückgüter, die auf der Förderfläche in Transportrichtung transportiert werden und sich nahe dem Seitenrandbereich befinden, angeschoben von der Förderfläche durch Interaktion mit dem Führungskörper und insbesondere durch Interaktion mit der ersten Seitenfläche des Führungskörpers, eine Bewegung in Richtung Mitte der Förderfläche durchführen.

Bevorzugt ist die Fördervorrichtung derart ausgestaltet, dass der Seitenrandbereich auf der gleichen Höhe und eben zur Förderfläche ausgeführt ist. Weiter bevorzugt handelt es sich beim Seitenrandbereich bevorzugt um einen Bereich der Fördervorrichtung, der nicht von der Förderfläche überstrichen wird, besonders bevorzugt um das nicht von der Förderfläche überstrichene Maschinenbett der Fördervorrichtung. Die Fördervorrichtung kann - bezogen auf die Mitte der Förderfläche - auf beiden Seiten jeweils einen Seitenrandbereich aufweisen oder lediglich auf einer Seite der Förderfläche.

In anderen Worten und bezogen auf ein orthogonales Koordinatensystem, dessen x-Achse durch die Transportrichtung gegeben ist, dessen z-Achse durch die Flächennormale der Förderfläche gegeben ist, und dessen y-Achse derart senkrecht auf die beiden vorgenannten steht, dass sich ein rechtshändiges orthogonales Koordinatensystem ergibt, weist der Normalenvektor der ersten Seitenfläche bevorzugt eine erste Vektorkomponente größer Null in minus x-Richtung, also entgegen die Transportrichtung, auf, eine zweite Vektorkomponente größer Null in plus oder minus y-Richtung, und eine dritte Vektorkomponente größer Null in z-Richtung. Je nachdem, ob der Führungskörper auf dem Seitenrandbereich links oder rechts der Mitte der Förderfläche angeordnet ist, ist die Vektorkomponente des Normalenvektors in plus oder minus y-Richtung, derart dass der Normalenvektor schräg hin zur Mitte der Förderfläche weist. In nochmals anderen Worten ist der Normalenvektor der ersten Seitenfläche also bevorzugt nicht parallel zur Transportrichtung und auch nicht senkrecht zur Transportrichtung.

Gemäß einer bevorzugten Weiterbildung der Erfindung ist der Führungskörper derart ausgestaltet, dass ein von der Fördervorrichtung transportiertes Stückgut auf der ersten Seitenfläche des Führungskörpers aufgleiten kann. Unter Aufgleiten ist besonders bevorzugt eine Bewegung eines Schwerpunktes des Stückguts gemeint, die eine Komponente parallel zur Flächennormalen der Förderfläche aufweist, also parallel zur zuvor definierten z-Achse des orthogonalen Koordinatensystems. Beispielsweise kann sich das Stückgut angeschoben von der Förderfläche und bedingt durch die Reibung mit der ersten Seitenfläche des Führungskörpers an der ersten Seitenfläche aufrichten. Derart führt der Schwerpunkt des Stückguts eine Bewegung mit einer Komponente parallel zur Flächennormalen der Förderfläche durch. Um das Aufgleiten des Stückguts an der ersten Seitenfläche weiter zu vereinfachen ist weiter bevorzugt vorgesehen, dass der Innenschnittwinkel zwischen der Grundfläche und der ersten Seitenfläche des Führungskörpers bevorzugt zwischen 30 Grad und 85 Grad besonders bevorzugt zwischen 50 Grad und 80 Grad, ganz besonders bevorzugt zwischen 60 Grad und 80 Grad ist. Weiter bevorzugt ist vorgesehen, dass der Innenschnittwinkel auf eine Transportgeschwindigkeit und/oder ein Gewicht der mit der Fördervorrichtung transportierten Stückgütern abgestimmt ist.

In diesem Zusammenhang ist weiter bevorzugt vorgesehen, dass der Normalenvektor der ersten Seitenfläche in einer Bezugsebene liegt, die senkrecht auf der Förderfläche steht und mit der Transportrichtung einen Winkel von 15 Grad bis 80 Grad, bevorzugt von 20 Grad bis 70 Grad, besonders bevorzugt von 25 Grad bis 60 Grad einschließt. Dies erleichtert weiter, dass die Stückgüter durch Interaktion mit dem Führungskörper und insbesondere durch Aufgleiten auf der ersten Seitenfläche eine Bewegung hin zur Mitte der Förderfläche durchführen.

Gemäß einer weiteren bevorzugten Weiterbildung der Erfindung ist vorgesehen, dass der Führungskörper eine zweite, bevorzugt ebene Seitenfläche aufweist, und derart ausgestaltet ist, dass ein Normalenvektor der zweiten Seitenfläche in einer Bezugsebene liegt, die senkrecht zur Förderfläche und senkrecht zur Transportrichtung ist. Die Bezugsebene für den Normalenvektor der zweiten Seitenfläche ist also bevorzugt parallel zur yz-Ebene des zuvor beschriebenen rechtshändigen orthogonalen Koordinatensystems. Bevorzugt ist die zweite Seitenfläche angrenzend an die erste Seitenfläche des Führungskörpers und weiter bevorzugt angrenzend an die Grundfläche und an die erste Seitenfläche. Zudem ist bevorzugt vorgesehen, dass der Führungskörper derart ausgestaltet ist, dass bei Anordnung wenigstens eines Teils seiner Grundfläche auf dem Seitenrandbereich, die zweite Seitenfläche in Transportrichtung neben der ersten Seitenfläche ist. Die beschriebene Ausgestaltung der zweiten Seitenfläche verbessert weiter die Funktion des Führungskörpers, indem Stückgüter, die an der ersten Seitenfläche des Führungskörpers aufgleiten, entlang der zweiten Seitenfläche des Führungskörpers heruntergleiten können und derart in Richtung Mitte der Förderfläche verschoben werden.

Weiter bevorzugt ist vorgesehen, dass der Führungskörper eine dritte, bevorzugt ebene Seitenfläche aufweist, und derart ausgestaltet ist, dass der Innenschnittwinkel zwischen der dritten Seitenfläche und der Grundfläche 90 Grad oder weniger ist. Bevorzugt ist der Innenschnittwinkel zwischen der dritten Seitenfläche und der Grundfläche 90 Grad. Bevorzugt ist die dritte Seitenfläche angrenzend an die erste Seitenfläche des Führungskörpers und weiter bevorzugt angrenzend an die Grundfläche und an die erste Seitenfläche. Zudem ist bevorzugt vorgesehen, dass der Führungskörper derart ausgestaltet ist, dass bei Anordnung wenigstens eines Teils seiner Grundfläche auf dem Seitenrandbereich, die dritte Seitenfläche weiter weg von der Mitte der Förderfläche ist als die zweite Seitenfläche. Bevorzugt ist die dritte Seitenfläche parallel zur Transportrichtung. Dies hat den Vorteil, dass der Führungskörper nicht seitlich über einen Rand der Fördervorrichtung absteht und derart für Personen, die an der Fördervorrichtung arbeiten eine Verletzungsgefahr darstellt.

In Zusammenhang mit der Ausgestaltung der Grundfläche ist gemäß einer weiteren bevorzugten Weiterbildung der Erfindung vorgesehen, dass ein Verhältnis einer längsten zwei Punkte einer Begrenzungslinie der Grundfläche verbindende Strecke zu einer kürzesten zwei Punkte der Begrenzungslinie verbindende Strecke kleiner gleich 5 ist. In anderen Worten hat der Führungskörper also bevorzugt nicht die Form einer Seitenführung, die sich über weite Strecken entlang der Förderfläche zieht und sehr lang und schmal ist. Stattdessen weist die Grundfläche des Führungskörpers eine Form auf, deren Verhältnis von Länge zu Breite, also deren Verhältnis von der längsten Strecke, die zwei Punkte der Begrenzungslinie verbindendet zur kürzesten Strecke, die zwei Punkte auf der Begrenzungslinie verbindet, kleiner gleich 5, bevorzugt kleiner gleich 4, besonders bevorzugt kleiner gleich 3 ist. Entsprechend erstreckt sich der Führungskörper auch nicht über weite Strecken entlang der Förderfläche. Derart wird sichergestellt, dass der Zugang zur Förderfläche und derart auch der Zugang zu den mit der Förderfläche transportierten Stückgütern durch den Führungskörper nicht versperrt wird. Zudem weist der Führungskörper aufgrund des Verhältnisses eine gute Stabilität auf.

Zudem ist in diesem Zusammenhang bevorzugt vorgesehen, dass die längste Strecke, die zwei Punkte der Begrenzungslinie verbindendet zwischen 10 cm und 70 cm, bevorzugt zwischen 15 cm und 60 cm, besonders bevorzugt zwischen 20 cm und 55 cm lang ist und/oder dass die kürzeste Strecke, die zwei Punkte der Begrenzungslinie verbindet, zwischen 15 cm und 45 cm, bevorzugt zwischen 20 cm und 40 cm, besonders bevorzugt zwischen 25 cm und 35 cm lang ist.

Weiterhin ist hinsichtlich der Grundfläche gemäß einer bevorzugten Weiterbildung der Erfindung vorgesehen, dass die Grundfläche des Führungskörpers ein Vieleck, bevorzugt ein Viereck ist. Dies hat sich als besonders geeignet für die Funktion des Führungskörpers erwiesen.

Erfindungsgemäß ist vorgesehen, dass die Grundfläche des Führungskörpers ein Trapez ist, dass zwei zueinander parallele Grundseiten des Trapezes parallel zur Transportrichtung der Fördervorrichtung sind, und dass die kürzere Grundseite des Trapezes näher bei der Mitte der Förderfläche ist, als die längere Grundseite des Trapezes. Dies ermöglicht auf einfache Weise den Führungskörper mit zumindest einem Teil seiner Grundfläche auf dem Seitenrandbereich anzuordnen.

Zudem ist bevorzugt vorgesehen, dass die Grundfläche des Führungskörpers ein rechtwinkliges Trapez ist. Ein rechtwinkliges Trapez weist nebst zwei zueinander parallelen Seiten, genau zwei rechte Innenwinkel auf und zudem zwei weitere Innenwinkel, mit jeweils einem von 90 Grad verschiedenen Wert. In diesem Zusammenhang ist weiterhin bevorzugt vorgesehen, dass der Führungskörper mit seiner Grundfläche in der Form des rechtwinkligen Trapezes derart ausgerichtet ist, dass die zwei rechten Innenwinkel in Transportrichtung der Fördervorrichtung hinter den zwei weiteren Innenwinkeln des Trapezes sind. In anderen Worten ist gemäß einer bevorzugten Weiterbildung der Erfindung vorgesehen, dass die Grundfläche des Führungskörpers das rechtwinklige Trapez mit den genau zwei rechten Innenwinkeln ist, und dass die zwei rechten Innenwinkel in Transportrichtung hinter den weiteren zwei Innenwinkeln des Trapezes sind. Dies ist eine besonders einfache Möglichkeit sicherzustellen, dass der Normalenvektor der ersten Seitenfläche des Führungskörpers schräg entgegen die Transportrichtung hin zur Mitte der Förderfläche weist.

Im Hinblick auf die Ausgestaltung des Führungskörpers ist gemäß einer weiteren bevorzugten Weiterbildung der Erfindung vorgesehen, dass der Führungskörper ein Polyeder, insbesondere ein konvexer Polyeder ist. Ein Polyeder ist ein dreidimensionaler Körper, der ausschließlich von ebenen Flächen begrenzt wird. Der Polyeder ist konvex, wenn alle Punkte einer Verbindungsstrecke zwischen zwei Punkten des Körpers ebenfalls Teil des Körpers sind. Bildlich gesprochen ist also bevorzugt vorgesehen, dass der Führungskörper keine Einbuchtungen oder Eindellungen aufweist. Ein als Polyeder und insbesondere als konvexer Polyeder ausgebildeter Führungskörper ist besonders einfach herzustellen.

Gemäß einer weiteren bevorzugten Weiterbildung der Erfindung ist vorgesehen, dass der Führungskörper als Pyramide oder als Pyramidenstumpf ausgebildet ist. Besonders bevorzugt als Pyramidenstumpf mit einer trapezförmigen Grundfläche. Diese Form hat sich als besonders geeignet erwiesen, um zu ermöglichen, dass die erste Seitenfläche mit der Grundfläche einen Innenschnittwinkel von weniger als 90 Grad aufweist, und um zu ermöglichen, dass bei Anordnung des Führungskörpers mit zumindest einem Teil seiner Grundfläche auf dem Seitenrandbereich, der Normalenvektor der ersten Seitenfläche schräg entgegen die Transportrichtung hin zu der Mitte der Förderfläche weist.

Weiterhin ist in diesem Zusammenhang vorgesehen, dass eine Spitze der Pyramide oder eine virtuelle Spitze des Pyramidenstumpfs über der Grundfläche des Führungskörpers ist. Dies erhöht die Stabilität des Führungskörpers, was insbesondere für schwerer Stückgüter von Vorteil ist.

Im Hinblick auf eine Höhe des Führungskörpers ist weiter bevorzugt vorgesehen, dass eine Höhe des Führungskörpers gemessen parallel zur Flächennormalen der Grundfläche, zwischen 5 cm und 50 cm, bevorzugt zwischen 10 cm und 40 cm, besonders bevorzugt zwischen 15 cm und 30 cm ist. Dieser Bereich hat sich als besonders vorteilhaft für das Verhindern des Herunterfallens von Stückgütern herausgestellt.

Wie bereits erwähnt ist der Führungskörper derart angeordnet und/oder ausgestaltet, dass zumindest ein Teil seiner Grundfläche auf dem Seitenrandbereich ist. In diesem Zusammenhang ist gemäß einer bevorzugten Weiterbildung vorgesehen, dass der Führungskörper derart ausgestaltet und/oder angeordnet ist, dass die gesamte Grundfläche auf dem Seitenrandbereich ist. Bei dieser Alternative wird die Grundfläche des Führungskörpers also vollständig im Seitenrandbereich der Fördervorrichtung angeordnet. Dies erleichtert die Installation des Führungskörpers.

Alternativ dazu ist in diesem Zusammenhang gemäß einer weiteren bevorzugten Weiterbildung der Erfindung vorgesehen, dass der Führungskörper derart ausgestaltet und/oder angeordnet ist, dass ein weiterer Teil seiner Grundfläche über der Förderfläche ist, dass der weitere Teil der Grundfläche zur Förderfläche beabstandet ist, reibungsfrei mit der Förderfläche ausgebildet ist und/oder eine Reibung mit der Förderfläche aufweist, die eine Förderfunktion der Fördervorrichtung nicht beeinträchtig. In anderen Worten kann ein Teil der Grundfläche auf dem Seitenrandbereich sein und ein weiterer Teil der Grundfläche des Führungskörpers über der Förderfläche. Dies ist insbesondere bei sehr schmalen Seitenrandbereichen von Vorteil. In Zusammenhang mit dieser Alternativ ist zudem bevorzugt vorgesehen, dass derjenige Teil der Grundfläche der über der Förderfläche ist, eine derart geringe Reibung mit der Förderfläche aufweist, oder bevorzugt gar keine Reibung aufweist, so dass die Förderfunktion nicht beeinträchtigt ist. Dies kann beispielsweise über eine geeignete Materialwahl erreicht werden und/oder dadurch, dass der weitere Teil der Grundfläche zur Förderfläche beabstandet ist, beispielsweise indem ein geringer Versatz in der Grundfläche des Führungskörpers vorhanden ist.

Hinsichtlich der Ausgestaltung der Fördervorrichtung ist gemäß einer bevorzugten Weiterbildung vorgesehen, dass die Fördervorrichtung ein Gurtbandförderer und bevorzugt ein Teleskopbandförderer ist. Bei einem Gurtbandförderer, der auch als Förderband oder Gurtförderer bezeichnet wird, wird die Förderfläche von einem Gurt und/oder Band gebildet. Ein Teleskopbandfördere weist zudem den Vorteil auf, dass eine Förderlänge stufenlos verstellbar ist.

Wie bereits erwähnt umfasst die Förderanlage wenigstens einen Führungsköper. In diesem Zusammenhang kann bevorzugt vorgesehen sein, dass die Förderanlage eine Mehrzahl an Führungskörpern umfasst. Weiter bevorzugt ist vorgesehen, dass alle Führungskörper derart ausgestaltet sind, dass die erste Seitenfläche aller Führungskörper mit der jeweiligen Grundfläche einen Innenschnittwinkel von weniger als 90 Grad aufweist, dass alle Führungskörper derart angeordnet und/oder ausgestaltet sind, dass zumindest ein Teil ihrer jeweiligen Grundflächen auf dem Seitenrandbereich ist, und dass die Normalenvektoren der ersten Seitenflächen aller Führungskörper schräg entgegen die Transportrichtung hin zu der Mitte der Förderfläche weisen.

In diesem Zusammenhang ist zudem gemäß einer bevorzugten Weiterbildung der Erfindung vorgesehen, dass die Förderanlage eine Mehrzahl an Führungskörpern umfasst, wobei die Führungskörper zu beiden Seiten der Mitte der Förderfläche derart angeordnet sind, dass gegenüber von jedem Führungskörper in Richtung senkrecht zur Transportrichtung auf der anderen Seite der Mitte kein Führungskörper angeordnet ist. In anderen Worten sind also keine zwei Führungskörper in Bezug auf die Transportrichtung am gleichen Ort rechts und zugleich links der Mitte der Förderfläche angeordnet. Derart werden Engstellen beim Transport der Stückgüter vermieden.

Gemäß einer weiteren bevorzugten Weiterbildung ist im Hinblick auf die Anordnung der Mehrzahl an Führungskörpern vorgesehen, dass die Führungskörper auf beiden Seiten der Mitte der Förderfläche gleichmäßig zueinander versetzt angeordnet sind. Bevorzugt ist also vorgesehen, dass der Abstand zwischen zwei Führungskörpern auf einer Seite der Mitte für alle Führungskörper auf dieser Seite jeweils gleich groß ist, und weiter bevorzugt auch gleich groß wie der Abstand zwischen jeweils zwei aufeinanderfolgenden Führungskörpern auf der anderen Seite der Mitte. Beispielsweise sind die Führungskörper mit einem Abstand von 0,3 m, 0,5 m, 0,7 m, 1 m oder 1,2 m entlang der Förderfläche angeordnet. Zudem sind die Führungskörper auf der einen Seite der Mitte bevorzugt derart zu den Führungskörpern auf der anderen Seite der Mitte angeordnet, dass ein Abstand eines Führungskörpers auf einer Seite zu zwei zueinander benachbarten Führungskörpern auf der anderen Seite gleich groß ist.

### Kurze Beschreibung der Zeichnungen

Nachfolgend wird die Erfindung unter Bezugnahme auf die anliegenden Zeichnungen anhand bevorzugter Ausführungsbeispiele näher erläutert.

In den Zeichnungen zeigen
- Fig. 1: schematische Darstellungen eines Führungskörpers aus mehreren Perspektiven, gemäß einem Ausführungsbeispiel der Erfindung,
- Fig. 2: schematische Darstellungen einer Förderanlage umfassend eine Fördervorrichtung und einen Führungskörper, gemäß zwei weiteren Ausführungsbeispielen der Erfindung,
- Fig. 3: schematische Darstellungen einer Förderanlage aus zwei Perspektiven, gemäß einem weiteren Ausführungsbeispiel der Erfindung, und
- Fig. 4: eine schematische Darstellung einer Förderanlage, gemäß einem weiteren Ausführungsbeispiel der Erfindung.

### Detaillierte Beschreibung der Ausführungsbeispiele

Die beschriebenen Ausführungsbeispiele sind lediglich Beispiele, die im Rahmen der Ansprüche auf vielfältige Weise modifiziert und/oder ergänzt werden können. Jedes Merkmal, das für ein bestimmtes Ausführungsbeispiel beschrieben wird, kann eigenständig oder in Kombination mit anderen Merkmalen in einem beliebigen anderen Ausführungsbeispiel genutzt werden. Jedes Merkmal, dass für ein Ausführungsbeispiel einer bestimmten Kategorie beschrieben wird, kann auch in entsprechender Weise in einem Ausführungsbeispiel einer anderen Kategorie eingesetzt werden.

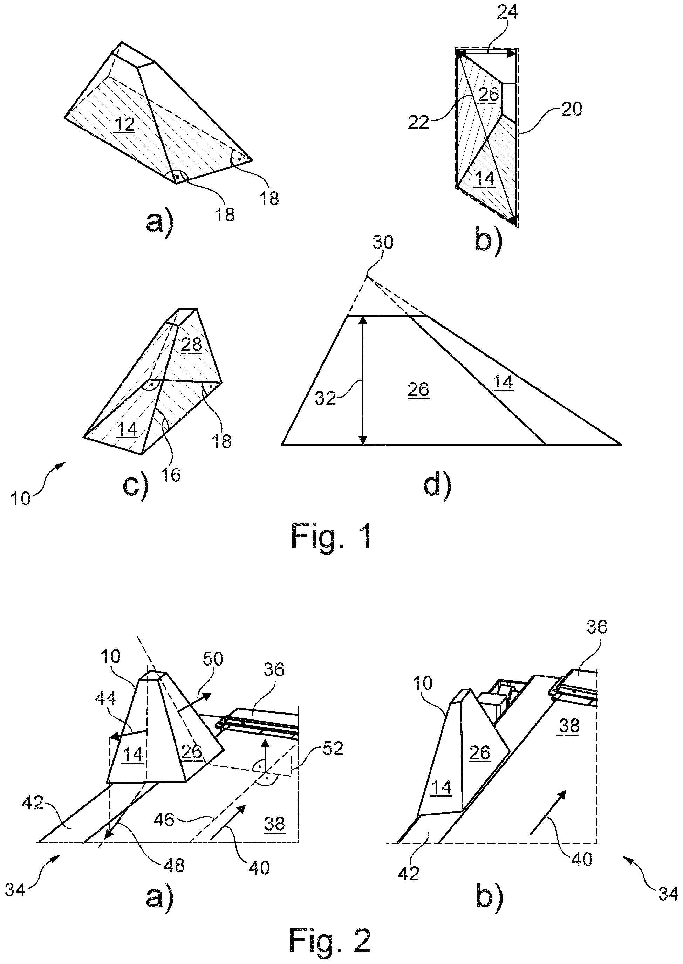

Figur 1 zeigt schematische Darstellungen eines Führungskörpers 10 aus mehreren Perspektiven, gemäß einem Ausführungsbeispiel der Erfindung. Der Führungskörper 10 weist im vorliegenden Ausführungsbeispiel die Form eines Pyramidenstumpfs auf, wobei eine Grundfläche 12 des Führungskörpers 10 ein Trapez ist, was besonders gut in Figur 1a) zu erkennen ist. Zudem weist der Führungskörper 10 eine erste vorliegend ebene Seitenfläche 14 auf, wobei die erste Seitenfläche 14 mit der Grundfläche 12 einen Innenschnittwinkel 16 von weniger als 90 Grad, vorliegend 65 Grad aufweist, was am besten in der Perspektive der Figur 1c) zu sehen ist.

Die Trapezförmige Grundfläche 12 weist zwei rechte Innenwinkel 18 auf. Zudem ist die Grundfläche 12 des Führungskörpers 10 derart dimensioniert, dass ein Verhältnis einer längsten zwei Punkte einer Begrenzungslinie 20 der Grundfläche 12 verbindenden Strecke 22 zu einer kürzesten zwei Punkte der Begrenzungslinie 20 verbindenden Strecke 24 kleiner gleich 5 ist. Wie am besten in Figur 1b) zu erkennen ist, weist vorliegend das Verhältnis der längsten Strecke 22 zur kürzesten Strecke 24 etwa den Wert 2 auf. Zudem ist die längste Strecke 22 vorliegend 59 cm lang und die kürzeste Strecke 24 ist vorliegend 31 cm lang.

Der Führungskörper 10 weist zudem eine zweite Seitenfläche 26 und eine dritte Seitenfläche 28 auf, auf die später eingegangen wird. Zudem ist der als Pyramidenstumpf ausgestaltete Führungskörper derart geformt, dass eine virtuelle Spitze 30 des Pyramidenstumpfs über der Grundfläche 12 ist. Eine Höhe 32 des Führungskörpers beträgt im vorliegenden Ausführungsbeispiel 23 cm.

Figur 2 zeigt zwei schematische Darstellungen einer Förderanlage 34 umfassend eine Fördervorrichtung 36 und den Führungskörper 10, gemäß zwei weiteren Ausführungsbeispielen der Erfindung. Die Fördervorrichtung 36 ist in beiden gezeigten Ausführungsbeispielen als Bandförderer 36 ausgestaltet. Die Fördervorrichtung 36 weist somit eine als Band ausgestaltete Förderfläche 38 auf, auf der Stückgüter (nicht gezeigt) in eine Transportrichtung 40 transportiert werden können. Die Fördervorrichtung 36 weist seitlich der Förderfläche 38 einen Seitenrandbereich 42 auf. Der Seitenrandbereich 42 wird nicht von der Förderfläche 38 überstrichen. Der Seitenrandbereich 42 ist eben und auf gleicher Höhe wie die Förderfläche 38 ausgestaltet.

In dem in Figur 2a) gezeigten Ausführungsbeispiel der Förderanlage 34, ist der Führungskörper 10 derart angeordnet, dass ein Teil seiner Grundfläche 12 auf dem Seitenrandbereich 42 ist und ein weiterer Teil seiner Grundfläche 12 über der Förderfläche 38. In dem in Figur 2b) gezeigten Ausführungsbeispiel der Förderanlage 34, ist der Führungskörper 10 derart angeordnet, dass die gesamte Grundfläche 12 des Führungskörpers 10 auf dem Seitenrandbereich 42 ist.

Zudem ist in den Ausführungsbeispielen in Figur 2, insbesondere in Figur 2a) zu erkennen, dass der Führungskörper 10 derart ausgestaltet und/oder angeordnet ist, dass ein Normalenvektor 44 der ersten Seitenfläche 14 schräg entgegen die Transportrichtung 40 hin zu einer Mitte 46 der Förderfläche 38 weist. In Figur 2a) ist zur besseren Darstellung außerdem eine Projektion 48 des Normalenvektors 44 auf die Förderfläche 38 dargestellt, um die Richtung des Normalenvektors 44 schräg entgegen die Transportrichtung 40 hin zur Mitte 46 zu verdeutlichen. Ebenfalls ist zu erkennen, dass der Führungskörper 10 derart ausgestaltet ist, dass ein Normalenvektor 50 der zweiten Seitenfläche 26 in einer Bezugsebene 52 liegt, die senkrecht zur Förderfläche 38 und senkrecht zur Transportrichtung 40 ist.

Der Führungskörper 10 ist also derart ausgestaltet, dass ein von der Fördervorrichtung 36 transportiertes Stückgut auf der ersten Seitenfläche 14 des Führungskörpers 10 aufgleiten kann, sowie durch Interaktion mit dem Führungskörper 10 in Richtung der Mitte 46 der Förderfläche 38 verschoben wird.

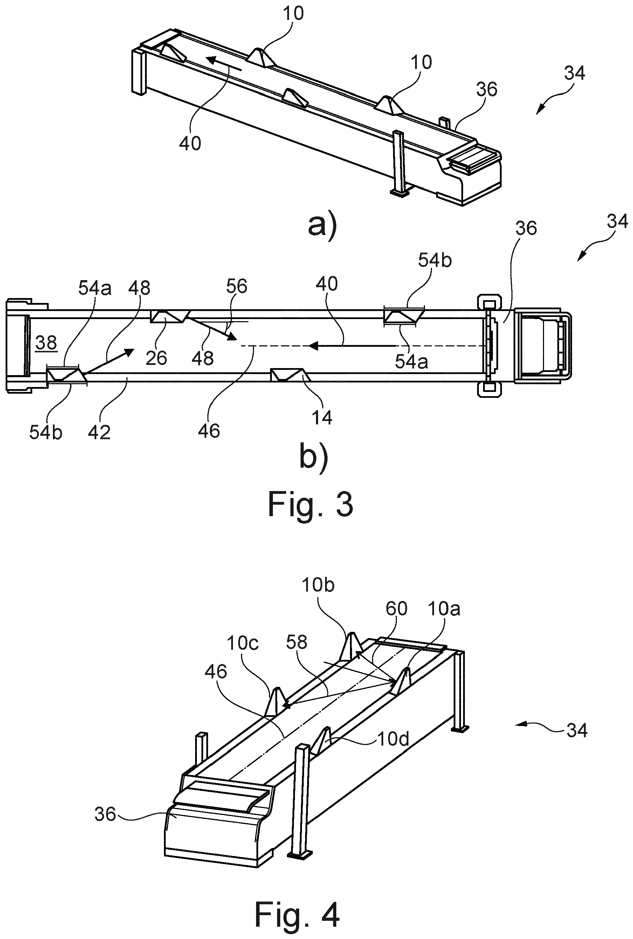

Figur 3 zeigt zwei schematische Darstellungen aus unterschiedlichen Perspektiven einer Förderanlage 34, gemäß einem weiteren Ausführungsbeispiel der Erfindung. In diesem Ausführungsbeispiel weist die Förderanlage 34 die Fördervorrichtung 36 zum Transportieren von Stückgütern entlang der Transportrichtung 40 und eine Mehrzahl, vorliegend vier Führungskörper 10 auf. Insbesondere in der Perspektive der Figur 3a), die die Förderanlage 34 von oben zeigt, ist gut zu erkennen, dass zwei parallele Grundseiten 54a, 54b der als Trapez ausgestalteten Grundfläche 12 der Führungskörpers 10 parallel zur Transportrichtung 40 der Fördervorrichtung 36 sind. Zudem ist die kürzere Grundseite 54a näher bei der Mitte 46 der Förderfläche 38 als die längere Grundseite 54b. Weiterhin ist gut zu erkennen, dass die Grundfläche 12 ein rechtwinkliges Trapez mit genau zwei rechten Innenwinkeln 18 ist, und die zwei rechten Innenwinkel 18 in Transportrichtung 40 hinter den weiteren zwei Innenwinkeln des Trapezes sind.

Zudem ist in Figur 3b) die Projektion 48 des Normalenvektors 44 der ersten Seitenfläche 14 auf die Förderfläche 38 eingezeichnet. Hier wird insbesondere deutlich, dass der Winkel 56 zwischen der Projektion 48 des Normalenvektors 44 und der Transportrichtung 40 in diesem Ausführungsbeispiel 30 Grad beträgt.

Ebenfalls ist an der Perspektive von oben einfach zu erkennen, dass der Seitenrandbereich 42 vorliegend auf beiden Seiten der Mitte 46 vorhanden ist und die Führungskörper 10 analog zu Figur 2a) jeweils mit einem Teil ihrer Grundfläche 12 auf dem Seitenrandbereich 42 sind und mit einem weiteren Teil der Grundfläche 12 über der Förderfläche 38. Die Führungskörper 10 sind zudem zu beiden Seiten der Mitte 46 der Förderfläche 38 derart angeordnet, dass gegenüber von jedem Führungskörper 10 in Richtung senkrecht zur Transportrichtung 40 auf der anderen Seite der Mitte 46 kein Führungskörper 10 angeordnet ist. Vorliegend sind die Führungskörper 10 zudem gleichmäßig versetzt angeordnet.

Figur 4 zeigt eine weiter schematische Darstellung einer Förderanlage 34, gemäß einem weiteren Ausführungsbeispiel der Erfindung. In diesem Ausführungsbeispiel weist die Förderanlage 34 die Fördervorrichtung 36 und eine Mehrzahl, vorliegend ebenfalls vier Führungskörper 10a, 10b, 10c. 10d auf. Die Führungskörper 10 sind analog zu Figur 2b) jeweils mit ihrer gesamten Grundfläche 12 auf dem Seitenrandbereich 42 angeordnet. Die Führungskörper 10 sind zudem analog zu Figur 3 zu beiden Seiten der Mitte 46 der Förderfläche 38 derart angeordnet, dass gegenüber von jedem Führungskörper 10 in Richtung senkrecht zur Transportrichtung 40 auf der anderen Seite der Mitte 46 kein Führungskörper 10 angeordnet ist. So ist in Figur 4 verdeutlicht, dass gegenüber des Führungskörpers 10a kein Führungskörper 10 angeordnet ist. Im Gegensatz zum in Figur 3 gezeigten Ausführungsbeispiel sind die Führungskörper in Figur 4 allerdings nicht gleichmäßig versetzt angeordnet. Denn wie zu erkennen, ist eine Distanz 58 zwischen dem Führungskörper 10a zum Führungskörper 10c größer als eine Distanz 60 zwischen dem Führungskörper 10a und dem Führungskörper 10b.

### Bezugszeichenliste

| | |
|---|---|
| Führungskörper | 10 |
| Grundfläche | 12 |
| Erste Seitenfläche | 14 |
| Innenschnittwinkel | 16 |
| Rechter Innenwinkel | 18 |
| Begrenzungslinie der Grundfläche | 20 |
| Längste zwei Punkte der Begrenzungslinie verbindende Strecke | 22 |
| Kürzeste zwei Punkte der Begrenzungslinie verbindende Strecke | 24 |
| Zweite Seitenfläche | 26 |
| Dritte Seitenfläche | 28 |
| Virtuelle Spitze | 30 |
| Höhe des Pyramidenstumpfs | 32 |
| Förderanlage | 34 |
| Fördervorrichtung, Bandförderer | 36 |
| Förderfläche, Band | 38 |
| Transportrichtung | 40 |
| Seitenrandbereich | 42 |
| Normalenvektor der ersten Seitenfläche | 44 |
| Mitte der Förderfläche | 46 |
| Projektion des Normalenvektors auf Förderfläche | 48 |
| Normalenvektor der zweiten Seitenfläche | 50 |
| Bezugsebene | 52 |
| Grundseite | 54 |
| Winkel zwischen Projektion des Normalenvektors und Transportrichtung | 56 |
| Distanz zwischen Führungskörper 10a und 10c | 58 |
| Distanz zwischen Führungskörper 10a und 10b | 60 |

## Patentansprüche

1. Förderanlage (34) umfassend eine Fördervorrichtung (36) zum Transportieren eines Stückgutes entlang einer Transportrichtung (40) und wenigstens einen eine Grundfläche (12) und eine erste Seitenfläche (14) aufweisenden Führungskörper (10),
wobei die Fördervorrichtung (36) eine Förderfläche (38) für das Stückgut und einen in Transportrichtung (40) seitlich der Förderfläche (38) angeordneten Seitenrandbereich (42) aufweist,
wobei die erste Seitenfläche (14) mit der Grundfläche (12) einen Innenschnittwinkel (16) von weniger als 90 Grad ausbildet, und
wobei der Führungskörper (10) derart angeordnet und/oder ausgestaltet ist, dass zumindest ein Teil seiner Grundfläche (12) auf dem Seitenrandbereich (42) ist, und dass ein Normalenvektor (44) der ersten Seitenfläche (14) schräg entgegen die Transportrichtung (40) hin zu einer Mitte (46) der Förderfläche (38) weist,
**dadurch gekennzeichnet, dass**
die Grundfläche (12) des Führungskörpers (10) ein Trapez ist, zwei zueinander parallele Grundseiten (54a, 54b) des Trapezes parallel zur Transportrichtung (40) der Fördervorrichtung (36) sind und die kürzere Grundseite (54a) des Trapezes näher bei der Mitte (46) der Förderfläche (38) ist als die längere Grundseite (54b) des Trapezes.

2. Förderanlage (34) nach dem vorhergehenden Anspruch, wobei der Führungskörper (10) derart ausgestaltet ist, dass ein von der Fördervorrichtung (36) transportiertes Stückgut auf der ersten Seitenfläche (14) des Führungskörpers (10) aufgleiten kann.

3. Förderanlage (34) nach einem der vorhergehenden Ansprüche, wobei der Führungskörper (10) eine zweite Seitenfläche (26) aufweist, und derart ausgestaltet ist, dass ein Normalenvektor (50) der zweiten Seitenfläche (26) in einer Bezugsebene (52) liegt, die senkrecht zur Förderfläche (38) und senkrecht zur Transportrichtung (40) ist.

4. Förderanlage (34) nach einem der vorhergehenden Ansprüche, wobei ein Verhältnis einer längsten zwei Punkte einer Begrenzungslinie (20) der Grundfläche (12) verbindende Strecke (22) zu einer kürzesten zwei Punkte der Begrenzungslinie (20) verbindende Strecke (24) kleiner gleich 5 ist.

5. Förderanlage (34) nach einem der vorhergehenden Ansprüche, wobei die Grundfläche (12) des Führungskörpers (10) ein Vieleck, bevorzugt ein Viereck ist.

6. Förderanlage (34) nach einem der vorhergehenden Ansprüche, wobei das Trapez ein rechtwinkliges Trapez mit genau zwei rechten Innenwinkeln (18) ist, und wobei die zwei rechten Innenwinkel (18) in Transportrichtung (40) hinter weiteren zwei Innenwinkeln des Trapezes sind.

7. Förderanlage (34) nach einem der vorhergehenden Ansprüche, wobei der Führungskörper (10) ein Polyeder, insbesondere ein konvexer Polyeder ist.

8. Förderanlage (34) nach einem der vorhergehenden Ansprüche, wobei der Führungskörper (34) als Pyramide oder als Pyramidenstumpf ausgebildet ist.

9. Förderanlage (34) nach einem der vorhergehenden Ansprüche, wobei der Führungskörper (10) derart ausgestaltet und/oder angeordnet ist, dass die gesamte Grundfläche (12) auf dem Seitenrandbereich (42) ist.

10. Förderanlage (34) nach einem der Ansprüche 1 bis 8, wobei der Führungskörper (10) derart ausgestaltet und/oder angeordnet ist, dass ein weiterer Teil seiner Grundfläche (12) über der Förderfläche (38) ist, und wobei der weitere Teil der Grundfläche (12) zur Förderfläche (38) beabstandet ist, reibungsfrei mit der Förderfläche (38) ausgebildet ist und/oder eine Reibung mit der Förderfläche (38) aufweist, die eine Förderfunktion der Fördervorrichtung (36) nicht beeinträchtig.

11. Förderanlage (34) nach einem der vorhergehenden Ansprüche, wobei die Fördervorrichtung (36) ein Gurtbandförderer, bevorzugt ein Teleskopbandförderer, ist.

12. Förderanlage (34) nach einem der vorhergehenden Ansprüche, umfassend eine Mehrzahl an Führungskörpern (10a, 10b, 10c, 10d), wobei die Führungskörper (10) zu beiden Seiten der Mitte (46) der Förderfläche (38) derart angeordnet sind, dass gegenüber von jedem Führungskörper (10) in Richtung senkrecht zur Transportrichtung (40) auf der anderen Seite der Mitte (46) kein Führungskörper (10) angeordnet ist.

13. Förderanlage (34) nach dem vorhergehenden Anspruch, wobei die Führungskörper (10) auf beiden Seiten der Mitte (46) der Förderfläche (38) gleichmäßig zueinander versetzt angeordnet sind.

14. Verwendung eines Führungskörpers (10) bei einer Fördervorrichtung (36) zum Verschieben eines Stückguts, das von der Fördervorrichtung (36) auf einer Förderfläche (38) entlang einer Transportrichtung (40) transportiert wird, hin zu einer Mitte (46) der Förderfläche (38),
wobei die Fördervorrichtung (36) einen seitlich der Förderfläche (38) angeordneten Seitenrandbereich (42) aufweist,
wobei der Führungskörper (10) eine Grundfläche (12) und eine erste Seitenfläche (14) aufweist,
wobei die erste Seitenfläche (14) mit der Grundfläche (12) einen Innenschnittwinkel (16) von weniger als 90 Grad ausbildet,
und wobei der Führungskörper (10) derart ausgestaltet ist, dass bei Anordnung zumindest eines Teils seiner Grundfläche (12) auf dem Seitenrandbereich (42) ein Normalenvektor (44) der ersten Seitenfläche (14) des Führungskörpers (10) schräg entgegen die Transportrichtung (40) hin zu der Mitte (46) der Förderfläche (38) weist,
**dadurch gekennzeichnet, dass**
die Grundfläche (12) des Führungskörpers (10) ein Trapez ist, zwei zueinander parallele Grundseiten (54a, 54b) des Trapezes parallel zur Transportrichtung (40) der Fördervorrichtung (36) sind und die kürzere Grundseite (54a) des Trapezes näher bei der Mitte (46) der Förderfläche (38) ist als die längere Grundseite (54b) des Trapezes.

## Claims

1. Conveyor system (34) comprising a conveying device (36) for transporting piece goods along a transport direction (40) and at least one guide body (10) comprising a base surface (12) and a first side surface (14),
wherein the conveying device (36) comprises a conveying surface (38) for the piece goods and a side edge region (42) arranged laterally of the conveying surface (38) in the transport direction (40),
wherein the first side surface (14) forms an internal intersection angle (16) of less than 90 degrees with the base surface (12), and
wherein the guide body (10) is arranged and/or configured in such a way that at least a part of its base surface (12) is disposed on the side edge region (42), and that a normal vector (44) of the first side surface (14) is directed obliquely opposite the transport direction (40) towards a center (46) of the conveying surface (38),
**characterized in that**
the base surface (12) of the guide body (10) is a trapezoid, two mutually parallel base sides (54a, 54b) of the trapezoid extend parallel to the transport direction (40) of the conveying device (36) and the shorter base side (54a) of the trapezoid is closer to the center (46) of the conveying surface (38) than the longer base side (54b) of the trapezoid.

2. Conveyor system (34) according to the preceding claim, wherein the guide body (10) is configured in such a way that a piece good transported by the conveying device (36) can slide on the first side surface (14) of the guide body (10).

3. Conveyor system (34) according to any one of the preceding claims, wherein the guide body (10) comprises a second side surface (26) and is configured such that a normal vector (50) of the second side surface (26) lies in a reference plane (52) which extends perpendicular to the conveying surface (38) and perpendicular to the transport direction (40).

4. Conveyor system (34) according to any one of the preceding claims, wherein a ratio between a distance (22) connecting the longest two points of a boundary line (20) of the base surface (12) and a distance (24) connecting the shortest two points of the boundary line (20) is less than or equal to 5.

5. Conveyor system (34) according to any one of the preceding claims, wherein the base surface (12) of the guide body (10) is a polygon, preferably a quadrangle.

6. Conveyor system (34) according to any one of the preceding claims, wherein the trapezoid is a right-angled trapezoid with exactly two right internal angles (18), and wherein the two right internal angles (18) are disposed behind two further internal angles of the trapezoid in the transport direction (40).

7. Conveyor system (34) according to any one of the preceding claims, wherein the guide body (10) is a polyhedron, in particular a convex polyhedron.

8. Conveyor system (34) according to any one of the preceding claims, wherein the guide body (34) is configured as a pyramid or as a truncated pyramid.

9. Conveyor system (34) according to any one of the preceding claims, wherein the guide body (10) is configured and/or arranged such that the entire base surface (12) is disposed on the side edge region (42).

10. Conveyor system (34) according to any one of claims 1 to 8, wherein the guide body (10) is configured and/or arranged in such a way that a further part of its base surface (12) is disposed above the conveying surface (38), and wherein the further part of the base surface (12) is spaced from the conveying surface (38), is configured frictionless with the conveying surface (38) and/or has a friction with the conveying surface (38) which does not impair a conveying function of the conveying device (36).

11. Conveyor system (34) according to any one of the preceding claims, wherein the conveying device (36) is a belt conveyor, preferably a telescopic belt conveyor.

12. Conveyor system (34) according to any one of the preceding claims, comprising a plurality of guide bodies (10a, 10b, 10c, 10d), wherein the guide bodies (10) are arranged on both sides of the center (46) of the conveying surface (38) in such a way that no guide body (10) is arranged opposite each guide body (10) in the direction perpendicular to the transport direction (40) on the other side of the center (46).

13. Conveyor system (34) according to the preceding claim, wherein the guide bodies (10) on both sides of the center (46) of the conveying surface (38) are evenly offset relative to each other.

14. Use of a guide body (10) in a conveying device (36) for displacing piece goods, which are transported by the conveying device (36) on a conveying surface (38) along a transport direction (40) towards a center (46) of the conveying surface (38),
wherein the conveying device (36) comprises a side edge region (42) arranged laterally of the conveying surface (38),
wherein the guide body (10) comprises a base surface (12) and a first side surface (14),
wherein the first side surface (14) forms an internal intersection angle (16) of less than 90 degrees with respect to the base surface (12), and
wherein the guide body (10) is configured in such a way that, when at least a part of its base surface (12) is arranged on the side edge region (42), a normal vector (44) of the first side surface (14) of the guide body (10) is directed obliquely opposite the transport direction (40) towards the center (46) of the conveying surface (38),
**characterized in that**
the base surface (12) of the guide body (10) is a trapezoid, two mutually parallel base sides (54a, 54b) of the trapezoid are arranged parallel to the transport direction (40) of the conveying device (36) and the shorter base side (54a) of the trapezoid is closer to the center (46) of the conveying surface (38) than the longer base side (54b) of the trapezoid.

## Revendications

1. Système de transport (34) comprenant un dispositif de transport (36) permettant de transporter un article le long d'une direction de transport (40) et au moins un corps de guidage (10) présentant une surface de base (12) et une première surface latérale (14),
dans lequel le dispositif de transport (36) présente une surface de transport (38) pour l'article et une zone de bord latéral (42) disposée dans la direction de transport (40) latéralement par rapport à la surface de transport (38),
dans lequel la première surface latérale (14) forme avec la surface de base (12) un angle d'intersection intérieur (16) inférieur à 90 degrés, et
dans lequel le corps de guidage (10) est disposé de telle manière et/ou est conçu de telle manière qu'au moins une partie de sa surface de base (12) est sur la zone de bord latéral (42) et qu'un vecteur normal (44) de la première surface latérale (14) est orienté de manière inclinée par rapport à la direction de transport (40) jusqu'au centre (46) de la surface de transport (38),
**caractérisé en ce que**
la surface de base (12) du corps de guidage (10) est un trapèze, deux côtés de base (54a, 54b) parallèles l'un à l'autre du trapèze sont parallèles à la direction de transport (40) du dispositif de transport (36) et le côté le plus court (54a) du trapèze est plus proche du centre (46) de la surface de transport (38) que le côté de base le plus long (54b) du trapèze.

2. Système de transport (34) selon la revendication précédente, dans lequel le corps de guidage (10) est conçu de telle manière qu'un article transporté par le dispositif de transport (36) peut glisser sur la première surface latérale (14) du corps de guidage (10).

3. Système de transport (34) selon l'une des revendications précédentes, dans lequel le corps de guidage (10) présente une deuxième surface latérale (26) et est conçu de telle manière qu'un vecteur normal (50) de la deuxième surface latérale (26) se situe dans un plan de référence (52) qui est perpendiculaire à la surface de transport (38) et perpendiculaire à la direction de transport (40).

4. Système de transport (34) selon l'une des revendications précédentes, dans lequel un rapport d'une distance (22) la plus longue reliant deux points d'une ligne de délimitation (20) de la surface de base (12) sur une distance (24) la plus courte reliant deux points de la ligne de délimitation (20) est inférieur ou égal à 5.

5. Système de transport (34) selon l'une des revendications précédentes, dans lequel la surface de base (12) du corps de guidage (10) est un polygone, de préférence un quadrilatère.

6. Système de transport (34) selon l'une des revendications précédentes, dans lequel le trapèze est un trapèze rectangle avec exactement deux angles droits internes (18), et dans lequel les deux angles droits internes (18) dans le direction de transport (40) sont derrière deux autres angles internes du trapèze.

7. Système de transport (34) selon l'une des revendications précédentes, dans lequel le corps de guidage (10) est un polyèdre, notamment un polyèdre convexe.

8. Système de transport (34) selon l'une des revendications précédentes, dans lequel le corps de guidage (34) est conçu sous forme de pyramide ou sous forme de pyramide tronquée.

9. Système de transport (34) selon l'une des revendications précédentes, dans lequel le corps de guidage (10) est conçu et/ou disposé de telle manière que la surface de base (12) totale est sur la zone de bord latérale (42).

10. Système de transport (34) selon l'une des revendications 1 à 8, dans lequel le corps de guidage (10) est conçu et/ou disposé de telle manière qu'une autre partie de sa surface de base (12) est au-dessus de la surface de transport (38), et dans lequel l'autre partie de la surface de base (12) est espacée par rapport à la surface de transport (38), est conçue sans friction avec la surface de transport (38), et/ou présente une friction avec la surface de transport (38) qui n'a pas d'influence sur la fonction de transport du dispositif de transport (36).

11. Système de transport (34) selon l'une des revendications précédentes, dans lequel le dispositif de transport (36) est un transporteur à bande, de préférence, un transporteur à bande télescopique.

12. Système de transport (34) selon l'une des revendications précédentes, comprenant une multiplicité de corps de guidage (10a, 10b, 10c, 10d), où les corps de guidage (10) sont disposés sur les deux côtés du centre (46) de la surface de transport (38) de telle manière qu'aucun corps de guidage (10) ne soit disposé en face de chaque corps de guidage (10) dans une direction perpendiculaire à la direction de transport (40) sur l'autre côté du centre (46).

13. Système de transport (34) selon l'une des revendications précédentes, dans lequel les corps de guidage (10) sont disposés décalés les uns par rapport aux autres de manière régulière sur les deux côtés du centre (46) de la surface de transport (38).

14. Utilisation d'un corps de guidage (10) chez un dispositif de transport (36) pour le déplacement d'un article qui est transporté par le dispositif de transport (36) sur une surface de transport (38) le long d'une direction de transport (40), jusqu'au centre (46) de la surface de transport (38),
dans laquelle le dispositif de transport (36) présente une zone de bord latérale (42) disposée latéralement par rapport à la surface de transport (38),
dans laquelle le corps de guidage (10) présente une surface de base (12) et une première surface latérale (14),
dans laquelle la première surface latérale (14) forme avec la surface de base (12) un angle d'intersection intérieur (16) inférieur à 90 degrés,
et dans laquelle le corps de guidage (10) est conçu de telle manière que, pour une disposition d'au moins une partie de sa surface de base (12) sur la zone de bord latéral (42), un vecteur normal (44) de la première surface latérale (14) du corps de guidage (10) est orienté de manière inclinée par rapport à la direction de transport (40) jusqu'au centre (46) de la surface de transport (38),
**caractérisé en ce que**
la surface de base (12) du corps de guidage (10) est un trapèze, deux côtés de base (54a, 54b) parallèles l'un à l'autre du trapèze sont parallèles à la direction de transport (40) du dispositif de transport (36) et le côté le plus court (54a) du trapèze est plus proche du centre (46) de la surface de transport (38) que le côté de base le plus long (54b) du trapèze.
